# EUROPÄISCHE PATENTSCHRIFT

(11) **EP 0 392 319 B1**
(45) Veröffentlichungstag und Bekanntmachung des Hinweises auf die Patenterteilung: **28.07.1993**
(21) Anmeldenummer: 90106338.8
(22) Anmeldetag: 03.04.1990
(51) Int. Cl.: A61D 1/08

(54) **Gerät zur Viehgeburtshilfe**
Device for assisting in the birth of livestock
Appareil pour aider à la parturition de bestiaux

(30) Priorität: 12.04.1989 DE 3911991
(43) Veröffentlichungstag der Anmeldung: 17.10.1990
(73) Patentinhaber: Rheintechnik Weiland & Kaspar KG Maschinenfabrik., 56170 Bendorf (DE)
(72) Erfinder: Weiland, Werner, D-5413 Bendorf-Sayn (DE)
(74) Vertreter: Quermann, Helmut, Dipl.-Ing.

(56) Entgegenhaltungen:
- EP-A- 0 081 740
- WO-A-86/06615

## Beschreibung

Die Erfindung betrifft ein Gerät zur Viehgeburtshilfe in Art einer gegen den Körper eines Muttertieres abstützbaren Vorrichtung, mit einer mit dem Muttertier im Bereich der Beckenhöhle in Anlage gelangenden Ansatzstütze, einer an der dem Muttertier abgewandten Seite der Ansatzstütze mit dieser verbindbaren Stange, einer auf dieser angeordneten Spannvorrichtung mit Haken zum Einhängen von Beinschlingen für das Jungtier, sowie einer beidseitig im Bereich des Beckens und im Bereich des Rückens des Muttertieres in Anlage gelangenden Halteeinrichtung für die Ansatzstütze.

Ein derartiges Gerät zur Viehgeburtshilfe ist aus der EP 0 081 740 A2 bekannt. Bei diesem ist die Ansatzstütze schwenkbar in der Stange gelagert. Die Halteeinrichtung ist der Ansatzstütze zugeordnet, derart, daß die Ansatzstütze über deren Stirnflächen hinaus gegen die Kraft von Federn verschiebliche, aber drehfest angeordnete Abstandshalter aufweist, die an ihren, der Ansatzstütze abgewandten Enden Zungen zur Anlage an den Seitenflächen des Muttertieres aufweisen. Die Zungen nehmen darüber hinaus an ihren freien Enden auf den Rücken des Muttertieres auflegbare Haltegurte auf. Beim Gebrauch des Gerätes wird die Ansatzstütze dicht unterhalb der Scheide angesetzt, unabhängig davon, ob das Muttertier steht oder liegt. Das gesamte Gerät wird dabei in einer sanften Schräge angesetzt. Eine Erhebung in der Mitte der Ansatzstütze ermöglicht das Gerät in den unteren Teil der Beckenhöhle des Muttertieres einzusetzen, ohne daß die Ansatzstütze nach unten abrutscht. Die beiden beidseitig im Bereich des Beckens des Muttertieres in Anlage gelangenden Zungen fixieren die Ansatzstütze zur Seite hin,die über den Rücken gelegten Haltegurte sichern in die Ansatzstütze zusätzlich gegen ein Abrutschen nach unten.

Nachteilig ist bei dem bekannten Gerät, daß es baulich recht aufwendig gestaltet ist, dies insbesondere verursacht durch die gelenkige Lagerung der Ansatzstütze in der Stange und die aufwendige Lagerung der verschiebbaren Zungen in der Ansatzstütze. Der Aufbau des Gerätes im Bereich der Ansatzstütze mit den diversen Einzelteilen bedingt darüber hinaus eine erhöhte Verschmutzung des Gerätes und somit nachteilige hygienische Folgen.

Aus der WO 86/06615 ist ein Gerät zur Viehgeburtshilfe bekannt, das eine Stange mit auf dieser angeordneter Spannvorrichtung mit Haken zum Einhängen von Beinschlingen für das Jungtier, eine mit der Stange verbundene Aufnahmegabel sowie ein in den beiden Enden der Aufnahmegabel schwenkbar gelagertes Stützelement aufweist. Das Stützelement ist als offener Ring ausgebildet, der beim Einsatz des Gerätes am Muttertier unterhalb der Scheide beidseitig im Bereich des Beckens und im Bereich des Rückens in Anlage gelangt. Die Aufnahmegabel ist in den Seitenpartien des Stützelementes gelagert und so ausgebildet, daß sie nicht mit dem Muttertier in Anlage gelangt.

Nachteilig ist bei dem genannten Gerät, daß dort keine in den unteren Teil der Beckenhöhle des Muttertieres unterhalb der Scheide einsetzbare Ansatzstütze vorhanden ist, die eine verletzungsfreie Viehgeburtshilfe gewährleistet. Kräfte werden bei dem Gerät vielmehr nur über das starre Stützelement in das Muttertier eingeleitet, wobei aufgrund der unterschiedlichen Größen und der Geburtspositionen der Muttertiere keine definierte Anlageposition des Stützelementes gewährleistet ist und zudem durch eine Bewegung des Muttertieres sich die Lage des Stützelementes während des Geburtsvorganges ändern kann.

Aufgabe der vorliegenden Erfindung ist es, ein Gerät der eingangs genannten Art so weiter zu bilden, daß eine Lageveränderung der Ansatzstütze und damit eine Verletzung des Muttertieres während des Geburtsvorganges wirksam verhindert werden kann, bei baulich einfacher und preisgünstiger Gestaltung des Gerätes.

Gelöst wird die Aufgabe dadurch, daß die Halteeinrichtung um eine parallel zur Längsachse der Ansatzstütze angeordnete Lagerachse schwenkbar in der Stange gelagert ist, und daß die Ansatzstütze mit der Stange starr verbunden ist. Das erfindungsgemäße Gerät zeichnet sich damit durch eine Entkoppelung der Halteeinrichtung von der Ansatzstütze aus, die Ansatzstütze dient ausschließlich dem Zweck, die bei der Geburtshilfe in die Stange eingeleiteten Kräfte definiert in das Muttertier unterhalb der Scheide einzuleiten, während die Halteeinrichtung für eine zusätzliche Stabilität der Ansatzstütze aufgrund deren Anlage am Muttertier, beidseitig im Bereich des Beckens und im Bereich des Rückens, sorgt. Die schwenkbare Lagerung der Halteeinrichtung um eine parallel zur Längsachse der Ansatzstütze angeordnete Lagerachse ermöglicht es, die Schrägstellung der Stange während des Geburtsvorganges zu verändern, ohne daß die Ansatzstütze in eine andere Position bewegt wird oder die Position der Halteeinrichtung verändert wird. Es versteht sich von selbst, daß die Halteeinrichtung entsprechend der Anatomie des Tieres gestaltet sein sollte, um sicherzustellen, daß sie beidseitig im Bereich des Beckens und im Bereich des Rückens des Muttertiers anliegt. Das erfindungsgemäße Gerät zur Viehgeburtshilfe zielt primär auf den Einsatz bei Kühen ab, ist hierauf jedoch nicht beschränkt.

Vorteilhaft ist die Halteeinrichtung so ausgebildet, daß sie eine in der Stange schwenkbar gelagerte Trägerstange aufweist, wobei mit jedem der beiden Enden der Trägerstange ein Seitenarm mit einem Ende und mit dem anderen Ende des jeweiligen Seitenarmes eine Rückenauflage mit einem Ende verbunden ist. Beim Einsatz des Gerätes liegen die Seitenarme beidseitig am Muttertier an, die Rückenauflagen umschließen das Muttertier im Bereich des Rückens. Die Seitenarme sollten vorteilhaft von der Trägerstange ausgehend zueinander geringfügig divergierend und die Rükkenauflagen von den Seitenarmen ausgehend zueinander konvergierend angeordnet sein. Ausgehend von der Trägerstange bilden die Seitenarme und die Rückenauflagen damit eine Form, die der Kontur des Muttertieres im vorgesehenen Anlagebereich der Halteeinrichtung weitgehend entspricht.

Ein besonders einfache bauliche Gestaltung der Halteeinrichtung ergibt sich, wenn diese als einteiliger, gebogener Rohrkörper ausgebildet ist, der überdies in einem starr mit der Stange verbundenen Lagerelement schwenkbar gelagert sein sollte. Es ist jedoch gleichfalls denkbar, daß die Halteeinrichtung aus zwei symmetrisch gebogenen Rohrkörperteilen besteht oder die Trägerstange zwecks Anpaßmöglichkeit an die Anatomie unterschiedlicher Tierrassen, insbesondere unterschiedlicher Beckenbreite der Rassen, teleskopierbar ist.

Das Lagerelement ist zweckmäßig als Block ausgebildet, mit einer Durchgangsbohrung zur Aufnahme der Trägerstange, wobei die Trägerstange Ausnehmungen zu deren axialer Festlegung mittels die Ausnehmungen durchsetzender Steckelemente aufweist. Darüber hinaus weist der Block vorteilhaft senkrecht zur Durchgangsbohrung eine weitere Durchgangsbohrung zur Aufnahme der Stange auf, mit mindestens einem dem Block durchsetzenden Arretierungsmittel zum axialen Festlegen der Stange. Denkbar ist es auch, daß der Block eine senkrecht zur Durchgangsbohrung verlaufende U-förmige Öffnung aufweist, in die die Stange einlegbar ist, mit einem die freien Schenkelenden der die Öffnung begrenzenden Schenkel durchsetzenden Haltestift für die Stange und einem mindestens einen Schenkel durchsetzenden Arretierungsmittel zum axialen Festlegen der Stange. Das Arretierungsmittel kann als Schraube ausgebildet sein, die mit ihrem freien Ende in die weitere Durchgangsbohrung oder den Schenkel einschraubbar ist. Zusätzlich kann die Stange im Bereich des Lagerelementes eine Nut aufweisen, in die das Arretierungsmittel zum axialen Festlegen der Stange einbringbar ist.

Die Erfindung schlägt damit ein Gerät zur Viegeburtshilfe vor, das in allen Betriebspositionen mittels der Halteeinrichtung eine sichere Führung der Ansatzstütze speziell wegen der besonderen Lagerung der Halteeinrichtung in der Stange gewährleistet. Die Halteeinrichtung ist baulich unabhängig von der Ansatzstütze und ermöglicht es damit, übliche Geräte zur Viehgeburtshilfe der genannten Art mit der Halteeinrichtung nachzurüsten.

Weitere Merkmale der Erfindung sind in der Beschreibung der Figuren und in den Unteransprüchen dargestellt.

In den Figuren ist die Erfindung an zwei Ausführungsformen beispielsweise dargestellt, ohne auf diese Ausführungsformen beschränkt zu sein.

Es zeigt:
- Figur 1: eine Aufsicht des erfindungsgemäßen Gerätes zur Viehgeburtshilfe,
- Figur 2: eine Seitenansicht des Gerätes,
- Figur 3: eine Ansicht A auf die Halteeinrichtung mit dessen Lagerelement,
- Figur 4: eine Detailansicht des in Figur 3 gezeigten Lagerelementes,
- Figur 4A: eine Ansicht B des Lagerelementes gemäß Figur 4,
- Figur 5: eine Detailansicht einer weiteren Ausführungsform des Lagerelementes und
- Figur 5A: eine Ansicht C des Lagerelementes gemäß Figur 5.

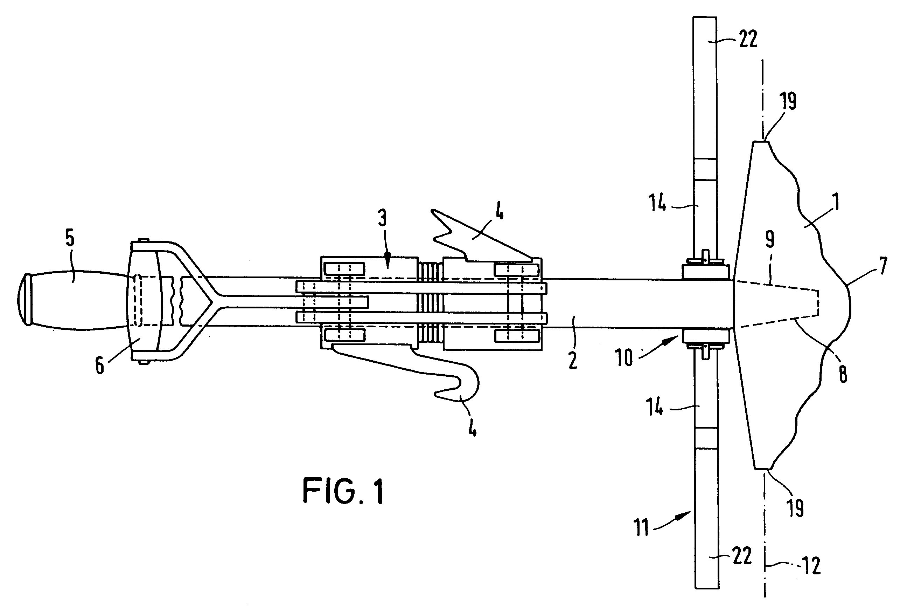

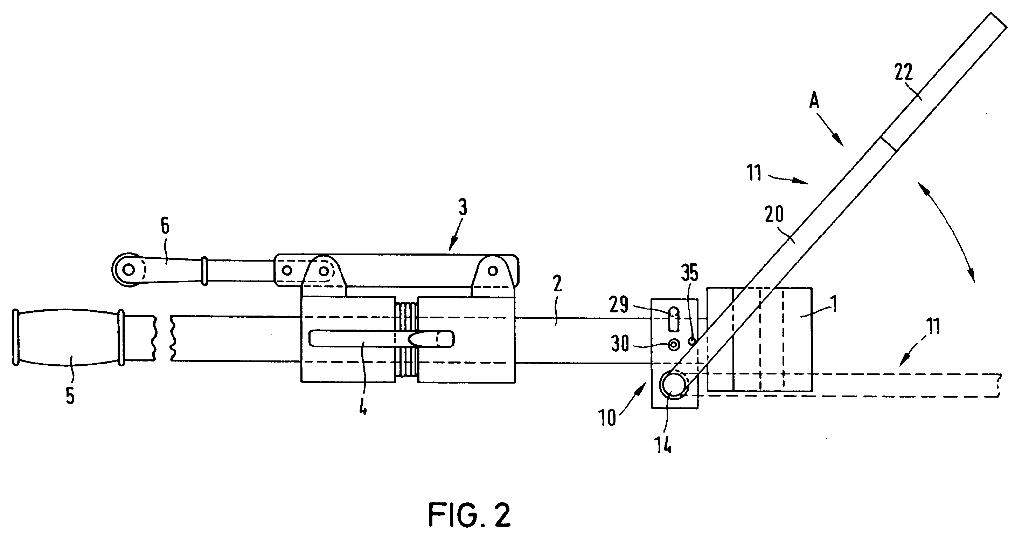

Das Gerät zur Viehgeburtshilfe besteht, wie den Figuren 1 und 2 zu entnehmen ist, im wesentlichen aus einer gegen den Körper des Muttertieres abstützbaren Ansatzstütze 1, einer an der dem Muttertier abgewandten Seite der Ansatzstütze 1 mit dieser verbundenen Stange 2, sowie einer auf der Stange 2 angeordneten Spannvorrichtung 3 mit zwei Haken 4 zum Einhängen von nicht dargestellten Beinschlingen für das Jungtier. Zum Halten des Gerätes dienen ein an dem der Ansatzstütze 1 abgewandten Ende der Stange 2 angeordneter Handgriff 5 sowie ein Handgriff 6 für die Spannvorrichtung 3. Die Spannvorrichtung 3 als solche ist nicht erfindungswesentlich und deshalb nicht beschrieben.

Die dem Muttertier zuzuwendende Fläche der Ansatzstütze 1 ist, wie aus Figur 1 ersichtlich, als stumpfer Keil ausgebildet. Die sich in der Mitte der Ansatzstütze 1 aufgrund der Keilform ergebende Erhebung 7 dient dem Zweck, das Gerät definiert in den unteren Teil der Beckenhöhle des Muttertieres einsetzen zu können. Die Ansatzstütze 1 als solche besteht aus einem nicht näher dargestellten, entsprechend der Gesamtform der Ansatzstütze 1 gestalteten Aufnahmeteil, das im Bereich der dem Muttertier zuzuwendenden Fläche sowie an dessen Stirnflächen eine Ummantelung aus Hartgummi aufweist. Die dem Muttertier zuzuwendende Oberfläche der Ummantelung zeichnet sich dabei durch eine gewellte Oberfläche aus. Dies soll verhindern, daß die Ansatzstütze 1 am Muttertier nach unten rutschen kann.

Die Ansatzstütze 1, konkret deren nicht näher verdeutlichtes Aufnahmeteil ist mit einer in der Tiefe konisch zusammenlaufenden Bohrung 8 versehen, in die der dem Handgriff 5 abgewandte, entsprechend konisch zusammenlaufende Bereich 9 der Stange 2 einsteckbar ist. Die dauerhafte Verbindung der Ansatzstütze 1 mit der Stange 2 kann ausschließlich durch Reibschluß erfolgen, wie für die Ausführungsform nach der Figur 1 dargestellt, oder aber durch eine Schraubverbindung zwischen Ansatzstütze und Stange sichergestellt sein.

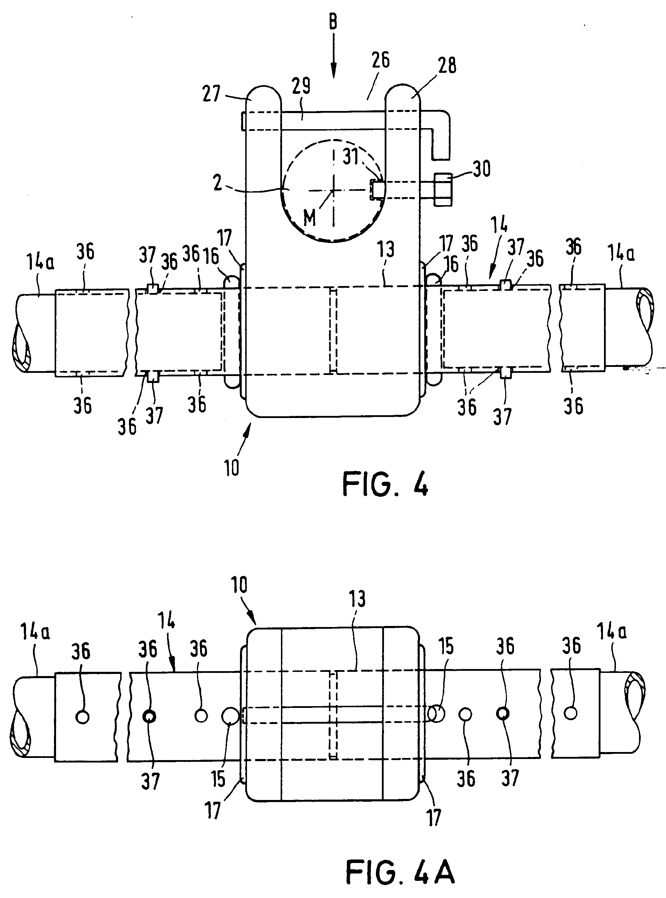

Wie den Darstellungen der Figuren 1 bis 3 zu entnehmen ist, stellt ein als Lagerblock 10 ausgebildetes Lagerelement eine starre Verbindung zwischen dem Lagerblock 10 und der Stange 2 sowie eine schwenkbare Verbindung zwischen dem Lagerblock 10 und der erfindungsgemäßen Halteeinrichtung 11 dar. Der Lagerblock 10 weist eine parallel zur Längsachse 12 der Ansatzstütze 1 verlaufende Durchgangsbohrung 13 (siehe Figuren 4 und 4A) auf, die ein Trägerrohr 14 geringfügig geringeren Durchmessers durchsetzt. Bezogen auf eine symmetrische Position des Trägerrohres 14 bezüglich des Lagerblockes 10 ist das Trägerrohr 14 beidseitig des Lagerblockes 10 in geringfügigem Abstand von diesem mit jeweils einer senkrechten Durchgangsbohrung 15 versehen, in die ein Sicherungselement 16, beispielsweise ein Splint einsteckbar ist und damit zu einer axialen Festigung des Trägerrohres 14 im Lagerblock 10 führt, bei gleichzeitiger freier Verschwenkmöglichkeit des Trägerrohres 14 um dessen Längsachse. Zwischen dem jeweiligen Sicherungselement 16 und dem Lagerblock 10 befindet sich eine Unterlegscheibe 17.

Das Trägerrohr 14 weist eine solche Länge auf, daß es im Bereich seiner beiden Enden 18 über die äußeren Begrenzungen 19 der Ansatzstütze 1 hinaussteht. Mit jedem der beiden Enden 18 des Trägerrohres 14 ist ein Seitenarmrohr 20 verbunden, das dem Ende 18 abgewandte Ende 21 des jeweiligen Seitenarmrohres 20 ist mit einem Rückenauflagenrohr 22 verbunden. Bezogen auf die Symmetrieachse 23 verlaufen die Seitenwandrohre 20 vom Trägerrohr 14 ausgehend zueinander geringfügig divergierend und die Rückenauflagenrohre 22 von den Seitenarmrohren 20 ausgehend zueinander konvergierend. Die Konvergenz bzw. Divergenz der Rohrabschnitte 20 bzw. 22 ist dabei so gewählt, daß die Abschnitte an den entsprechenden Körperteilen des Muttertieres anliegen, bei dem gezeigten Gerät schließt beispielsweise das Trägerrohr 14 mit dem jeweiligen Seitenarmrohr einen Winkel von etwa 100° ein und das jeweilige Seitenarmrohr 20 mit dem zugeordneten Rückenauflagenrohr 22 einen Winkel von 130°. Zwischen den beiden freien Enden 24 der Rükkenauflagenrohre 22 ist eine Öffnung 25 gebildet, die etwa halb so groß ist wie die Länge des Trägerrohres, durch diese Öffnung 25 kann beim Ansetzen des Gerätes von unten der Schwanz des Muttertieres durchgeführt werden.

Gründsätzlich ist die Halteeinrichtung 11 im Lagerblock 10 frei schwenkbar gelagert, wodurch die Möglichkeit besteht, die Halteeinrichtung 11 den unterschiedlichen Positionen des Muttertieres anzupassen. Zwei mögliche Arbeitspositionen der Halteeinrichtung 11 sind beispielsweise in Figur 2 mit durchgezogenen und strichlierten Linien verdeutlicht. Die Halteeinrichtung 11 ist mittels einer Arretierung 35 arretierbar. Die in Figur 1 gezeigte Position der Halteeinrichtung 11, in der diese in eine senkrecht zur Stange 2 orientierte Ebene bewegt ist, dient ausschließlich der einfacheren Darstellung des erfindungsgemäßen Gerätes.

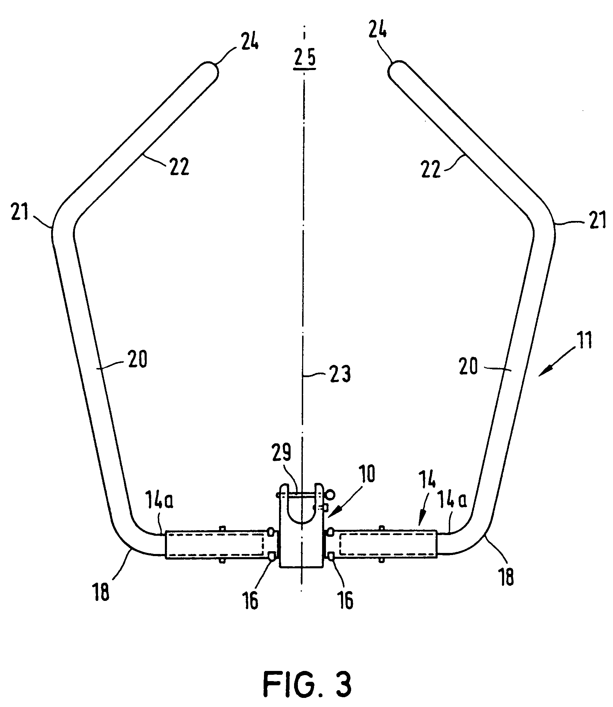

Die Erfindung ist nicht darauf beschränkt, daß die Halteeinrichtung 11 als in einer Ebene angeordneter, vorzugsweise einstückiger Rohrkörper ausgebildet ist, sondern sie kann durchaus auch symmetrisch in der Ebene abgeknickt sein, beispielsweise parallel zum Trägerrohr 14 im Mittelbereich der Seitenarmrohre 20. Generell ist die Ausgestaltung des Rohrkörpers der Halteeinrichtung 11 entsprechend der Ausbildung des Muttertieres im Bereich deren Becken und Rükken zu wählen und gegebenenfalls der Einfluß bestimmter Tierrassen zu berücksichtigen. So zeigen die Figuren 3, 4 und 4A ein Trägerrohr 14 in das beidendig Trägerrohrabschnitte 14A unterschiedlich tief einsteckbar sind, womit die Breite der Halteeinrichtung 11 variiert werden kann. In bekannter Art und Weise ist das Trägerrohr 14 für die Breitenverstellung der Halteeinrichtung 11 mit mehreren Löchern 36 versehen, wobei in jeweils zwei gegenüberliegende Löcher 36 Federknöpfe 37 einsetzbar sind, die über nicht näher dargestellte Federelemente mit den Innenwandungen der Trägerrohrabschnitte 14 A verbunden sind.

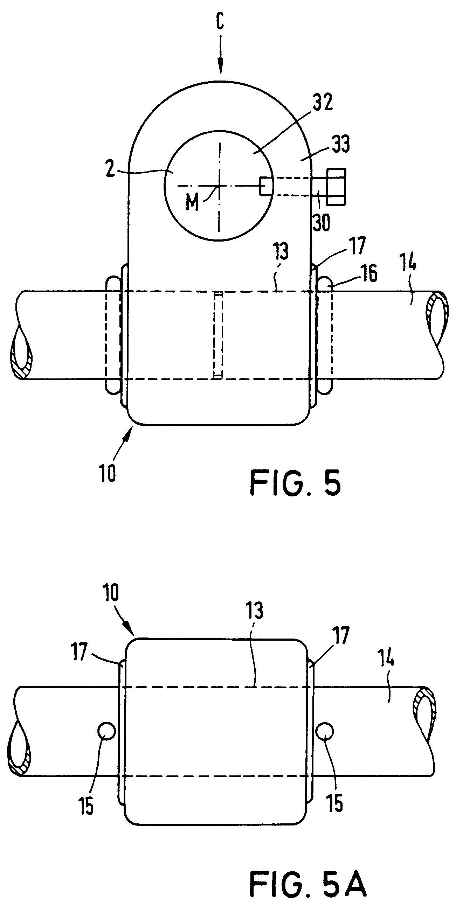

Die Figuren 4, 4A, 5 und 5A zeigen unterschiedliche Ausbildungen des Lagerblockes 10, der einerseits die als einstückiger, gebogener Rohrkörper ausgebildete Halteeinrichtung 11 schwenkbar aufnimmt und der andererseits eine starre Verbindung mit der Stange 2 ermöglicht. Bei der in den Figuren 4 und 4A gezeigten Ausführungsform weist der Lagerblock 10 senkrecht zur Durchgangsbohrung 13 eine U-förmige Öffnung 26 auf, in die die Stange 2 einlegbar ist. Die freien Schenkelenden 27 und 28 durchsetzt ein Haltestift 29, der Abstand zwischen diesem und dem Grund der U-förmigen Öffnung 26 entspricht im wesentlichen der Öffnungsbreite zwischen den beiden Schenkeln und ist geringfügig größer als der Durchmesser der Stange 2. Den Schenkel 28 durchsetzt auf Höhe des Stangenmittelpunktes M eine Schraube 30, die in eine Nut 31 der Stange 2 einschraubbar ist. In eingeschraubtem Zustand bewirkt die Schraube 30 eine axiale Festlegung der Stange 2 in der Öffnung 26. Die Stange 2 kann im Bereich des Lagerblockes 10 glatt ausgebildet sein, es ist nicht erforderlich, daß die Stange 2 mit der Nut 31 versehen ist, sie kann ferner über ihre gesamte Länge mit ringartigen Erhöhungen und Vertiefungen versehen sein, die mit der Spannvorrichtung zusammenwirken.

Die Figuren 5 und 5A zeigen eine abgewandelte Ausführung des Lagerblockes 10, der statt der Öffnung 26 senkrecht zur Durchgangsbohrung 13 eine weitere Durchgangsbohrung 32 zur Aufnahme der Stange 2 aufweist, wobei der Durchmesser der Durchgangsbohrung 32 geringfügig größer wie der Außendurchmesser der Stange 2 gewählt ist. Entsprechend der Darstellung der Figur 4 ist auch diese Ausführungsform mit einer Arretierschraube 30 versehen, die den Ringbereich 33 des Lagerblockes 10 durchsetzt.

## Patentansprüche

1. Gerät zur Viehgeburtshilfe in Art einer gegen den Körper eines Muttertieres abstützbaren Vorrichtung, mit einer mit dem Muttertier im Bereich der Beckenhöhle in Anlage gelangenden Ansatzstütze, einer an der dem Muttertier abgewandten Seite der Ansatzstütze mit dieser verbindbaren Stange, einer auf dieser angeordneten Spannvorrichtung mit Haken zum Einhängen von Beinschlingen für das Jungtier, sowie einer beidseitig im Bereich des Beckens und im Bereich des Rükkens des Muttertieres in Anlage gelangenden Halteeinrichtung für die Ansatzstütze, **dadurch gekennzeichnet,** daß die Halteeinrichtung (11) um eine Parallel zur Längsachse (12) der Ansatzstütze (1) angeordnete Lagerachse (14) schwenkbar in der Stange (2) gelagert ist, und daß die Ansatzstütze (1) mit der Stange (2) starr verbunden ist.

2. Gerät nach Anspruch 1, **dadurch gekennzeichnet**, daß die Halteeinrichtung (11) eine in der Stange (2) schwenkbar gelagerte Trägerstange (14) aufweist, wobei mit jedem der beiden Enden (18) der Trägerstange (14) ein Seitenarm (20) mit einem Ende und mit dem anderen Ende (21) des jeweiligen Seitenarms (20) eine Rückenauflage (22) mit einem Ende verbunden ist.

3. Gerät nach Anspruch 2, **dadurch gekennzeichnet,** daß die Seitenarme (20) von der Trägerstange (14) ausgehend zueinander geringfügig divergierend und die Rückenauflagen (22) von den Seitenarmen (20) ausgehend zueinander konvergierend angeordnet sind.

4. Gerät nach einem der Ansprüche 1 bis 3, **dadurch gekennzeichnet,** daß die Halteeinrichtung (11) als einteiliger, gebogener Rohrkörper (22, 20, 14, 20, 22) ausgebildet ist, der in einem starr mit der Stange (2) verbundenen Lagerelement (10) schwenkbar gelagert ist.

5. Gerät nach Anspruch 4, **dadurch gekennzeichnet,** daß das Lagerelement als Lagerblock (10) ausgebildet ist, mit einer Durchgangsbohrung (13) zur Aufnahme der Trägerstange (14), wobei die Trägerstange (14) Ausnehmungen (15) zu deren axialer Festlegung mittels die Ausnehmungen (15) durchsetzender Steckelemente (16) aufweist.

6. Gerät nach Anspruch 5, **dadurch gekennzeichnet,** daß der Lagerblock (10) senkrecht zur Durchgangsbohrung (13) eine weitere Durchgangsbohrung (32) zur Aufnahme der Stange (2) aufweist, mit mindestens einem den Lagerblock (10) durchsetzenden Arretierungsmittel (30) zum axialen Festlegen der Stange (2).

7. Gerät nach Anspruch 5, **dadurch gekennzeichnet,** daß der Lagerblock (10) eine senkrecht zur Durchgangsbohrung (13) verlaufende U-förmige Öffnung (26) aufweist, in die die Stange (2) einlegbar ist, mit einem die freien Schenkelenden (27, 28) der die Öffnung (26) begrenzenden Schenkel durchsetzenden Haltestift (29) für die Stange (2) und einem mindestens einen Schenkel (28) durchsetzenden Arretierungsmittel (30) zum axialen Festlegen der Stange.

8. Gerät nach Anspruch 6 oder 7, **dadurch gekennzeichnet,** daß das Arretierungsmittel als Schraube (30) ausgebildet ist, die mit ihrem freien Ende in die weitere Durchgangsbohrung (32) oder die Öffnung (26) einschraubbar ist.

9. Gerät nach einem der Ansprüche 5 bis 8, **dadurch gekennzeichnet,** daß die Stange (2) im Bereich des Lagerelementes (10) eine Nut (31) aufweist.

10. Gerät nach einem der Ansprüche 2 bis 9, **dadurch gekennzeichnet,** daß die Trägerstange (14) längenveränderlich, insbesondere teleskopierbar ausgebildet ist.

## Revendications

1. Appareil destiné à aider à la parturition de bestiaux, dans le genre d'un dispositif à appuyer contre le corps d'un animal femelle, comportant un appui à embase arrivant en position avec l'animal femelle dans la zone de la cavité pelvienne, une barre pouvant être reliée à l'appui à embase sur la face de celui-ci éloignée de l'animal femelle, un dispositif de fixation disposé sur la barre avec des crochets pour accrocher des bretelles pour les jambes du jeune animal, ainsi qu'un dispositif de support pour l'appui à embase se mettant en position des deux côtés de la zone du bassin et de la zone du dos de l'animal femelle,
appareil caractérisé :
- en ce que le dispositif de support (11) est monté sur la barre (2) en pouvant pivoter autour d'un axe de coussinet (14) disposé parallèlement à l'axe longitudinal (12) de l'appui à l'embase (1), et
- en ce que l'appui à embase (1) est relié rigidement à la barre (2).

2. Appareil selon la revendication 1, caractérisé :
- en ce que le dispositif de support (11) comprend une barre porteuse (14) montée avec pivotement possible dans la barre (2) et à chacune des deux extrémités (18) de la barre support (14) est lié un bras latéral (20) par une extrémité et par l'autre extrémité (21) du bras latéral (20) correspondant est lié un appui dorsal (22) par une extrémité.

3. Appareil selon la revendication 2, caractérisé :
- en ce que les bras latéraux (20) sont réalisés divergents légèrement l'un par rapport à l'autre à partir de la barre porteuse (14) et les appuis dorsaux sont disposés convergents l'un par rapport à l'autre à partir des bras latéraux (20).

4. Appareil selon l'une des revendications 1 à 3, caractérisé :
- en ce que le dispositif de support (11) est réalisé en un corps tubulaire (22, 20, 14, 20, 22) plié et en un seul bloc, qui est monté avec pivotement possible dans un élément de support (10) relié rigidement à la barre (2).

5. Appareil selon la revendication, caractérisé :
- en ce que l'élément de support est réalisé comme un bloc coussinet (10) avec un alésage de passage (13) pour recevoir la barre porteuse (14), qui elle, comporte des évidements (15) pour sa fixation axiale au moyen d'éléments de blocage (16) traversant les évidements (15).

6. Appareil selon la revendication 5, caractérisé :
- en ce que le bloc coussinet (10) a un autre alésage passage (32) perpendiculaire à l'alésage de passage (13) et destiné à recevoir la barre (2), alésage (32) qui comporte au moins un moyen de blocage (30) traversant le bloc coussinet (10) et qui est destiné à fixer axialement la barre (2).

7. Appareil selon la revendication 5, caractérisé :
- en ce que le bloc coussinet (10) comporte une ouverture (26) en forme de U de développant perpendiculairement à l'alésage de passage (13), ouverture dans laquelle est insérée la barre (2), avec une goupille de fixation (29) pour la barre (2) traversant les extrémités libres des branches (27, 8) délimitant l'ouverture (26) et avec un moyen de blocage traversant (30) au moins une branche (28) et destiné à fixer axialement la barre.

8. Appareil selon les revendications 6 ou 7, caractérisé :
- en ce que le moyen de blocage est un boulon (30) qui peut être inséré par vissage avec son extrémité libre dans l'autre alésage de passage (32) ou dans l'ouverture (26).

9. Appareil selon l'une des revendications 5 à 8, caractérisé :
- en ce que la barre (2) comporte une rainure (31) dans la zone de l'élément de coussinet (10).

10. Appareil selon l'une des revendications 2 à 3, caractérisé :
- en ce que la barre support (14) est réalisée de longueur variable, en particulier télescopique.

## Claims

1. A device for assisting the birth of livestock in the form of an apparatus which can be supported against the body of the mother animal, with a projecting bearer which contacts the mother animal in the region of the pelvic cavity, a rod which can be attached to the projecting bearer on the side of the latter which is remote from the mother animal, a gripping device disposed on the rod with hooks for the suspension of leg nooses for the young animal, and a holding device for the projecting bearer, both sides of which device come into contact with the pelvic region and the back region of the mother animal, characterised in that the holding device (11) is mounted on the rod (2) so that it can pivot about a bearing axis (14) disposed parallel to the longitudinal axis (12) of the projecting bearer (1), and that the projecting bearer (1) is rigidly attached to the rod (2).

2. A device according to claim 1, characterised in that the holding device (11) comprises a support bar (14) pivotally mounted on the rod (2), wherein one end of a side arm (20) is attached to each of the two ends (18) of the support bar (14), and one end of a back support (22) is attached to the other end (21) of the respective side arm (20).

3. A device according to claim 2, characterised in that the side arms (20) are disposed slightly diverging with respect to each other starting from the support bar (14) and the back supports (22) are disposed converging with respect to each other starting from the side arms (20).

4. A device according to any one of claims 1 to 3, characterised in that the holding device (11) is constructed as a one-piece, bent tubular body (22, 20, 14, 20, 22) which is pivotally mounted in a bearing element (10) rigidly attached to the rod (2).

5. A device according to claim 4, characterised in that the bearing element is formed as a bearing block (10) with a through-hole (13) to receive the support bar (14), wherein the support bar (14) has recesses (15), insertion elements (16) being passed through to provide for their axial securement by means of the recesses (15).

6. A device according to claim 5, characterised in that the bearing block (10) has a further through-hole (32) perpendicular to the through-hole (13), to receive the rod (2), with at least one locking means (30) passing through the bearing block (10) for the axial fixing of the rod (2).

7. A device according to claim 5, characterised in that the bearing block (10) has a U-shaped opening (26) extending perpendicularly to the through-hole (13), in which opening the rod (2) can be inserted, with a retaining pin (29) for the rod (2), which retaining pin passes through the free limb ends (27, 28) of the limbs delimiting the opening (26), and a locking means (30) passing through at least one limb (28) for the axial fixing of the rod.

8. A device according to claim 6 or 7, characterised in that the locking means is constructed as a screw (30), the free end of which can be screwed into the further through-hole (32) or the opening (26).

9. A device according to any one of claims 5 to 8, characterised in that the rod (2) has a slot (31) in the region of the bearing element (10).

10. A device according to any one of claims 2 to 9, characterised in that the support bar (14) is constructed so that it is of variable length, particularly telescopically.
